# EUROPEAN PATENT SPECIFICATION

(11) **EP 1 724 047 B1**
(45) Date of publication and mention of the grant of the patent: **10.09.2008**
(21) Application number: 05017764.1
(22) Date of filing: 16.08.2005
(51) Int. Cl.: B23K 3/06, H02K 44/06

(54) **Wave soldering pot including an electromagnetic pump**
Wellenlötanlage mit einer elektromagnetischen Pumpe
Bassin de brasure à la vague comprenant une pompe électromagnétique.

(30) Priority: 17.05.2005 CN 200520019014
(43) Date of publication of application: 22.11.2006
(73) Proprietor: JT Automation Equipment Co., Ltd., Baoan Shenzhen Guangdong 518000 (CN)
(72) Inventor: Chai, Minghua, Shenzhen Guangdong Province 518000 (CN)
(74) Representative: Hagemann, Heinrich

(56) References cited:
- EP-A- 0 345 915
- EP-A- 0 849 023

## Description

### Technical Field

The present invention relates to a soldering device using liquid metal solder which is employed in producing electronic products, and particularly to an electromagnetic driving wave soldering pot and a wave driving electromagnetic pump used in the soldering pot for driving liquid metal solder, of the kind disclosed in EP-A-0 849 023.

### Background of the invention

In the Surface Mounting Technology (SMT), especially in the soldering technologies of dual wave soldering for printed boards and single wave soldering for Surface Mounting Components (SMC), both the wave soldering technology and the wave soldering pot which use liquid solder must be employed.

Generally, most of the wave soldering machines are of mechanical pump type. Due to rotating at high temperature (about 250°C), the blade of the mechanical pump is abraded quickly. Thus not only the solder is subject to contaminating, but also the worn blade and other components are required to be maintained and replaced periodically, resulting in inconvenience to the user. Additionally, the rotation movement of the mechanical pump causes disturbance of the surface of the tin solder, which increases the oxidation and forms lots of scruff. In order to overcome the above defects, a wave soldering pot which employs a conductive electromagnetic pump (e.g., U.S. Patent No. 3,797,724 and CN Patent No. 8620924.2) or a unidirectional electromagnetic pump (e.g., CN Patents Nos. 93246899.3 and 91058162) are proposed subsequently. Although both may overcome the abrasion problem of the mechanical pump, the former tends to generate oxidized residue and mask electrodes, which will cause the wave to be unstable and even significantly fluctuated, while the latter form a component of the forward magnetic field by a phase difference caused by a magnetic path difference of the electromagnet, therefore the component of the magnetic field is limited and efficiency is poor.

The CN Patents Nos. 96236223.9 and 00226351.3 disclose three-phase electromagnetic pumps for a wave soldering pot. Such electromagnetic pump gets improved in efficiency as compared with the above conductive electromagnetic pump and unidirectional electromagnetic pump. However, such three-phase electromagnetic pump requires a three-phase power supply having a phase difference that is less than 90° , while the normal three-phase power supply has a phase difference of 120°. Therefore, an extra specific device is needed to obtain the three-phase power supply having the phase difference that is less than 90°. Such specific device is complicated in structure and very costly, thus it is difficult to decrease the cost of the wave soldering pot. Additionally, because the phase difference is less than 90°, the composite vector of the reverse magnetic field is not zero, such that a force for counteracting the straight thrust force that pushes the metal solder is formed. Therefore, the three-phase electromagnetic pump cannot completely eliminate the power loss caused by the reverse magnetic field, the energy of the three-phase alternating magnetic field cannot be effectively used, and the thrust and the flow rate thereof are limited. Therefore such a three-phase electromagnetic pump cannot fully replace the conventional mechanical pump in practical application, and cannot meet the requirement of real production as well.

### Summary of the Invention

An object of the present invention is to provide an electromagnetic driving wave soldering pot with a electromagnetic pump that has low energy consumption and increased thrust.

To achieve the above object, the present invention provides an electromagnetic driving wave soldering pot, which includes at least an electromagnetic pump, a tin bath and a nozzle, and the each electromagnetic pump includes two iron cores, coils group provided between the two iron cores and a pump slot, wherein the pump slot communicates with the nozzle, the coils group includes three coils, and the three coils are positioned in such way that they offset from each other by 1/3 of the coil-side space of the single coil along the direction of the pump slot, and the three coils are supplied with three-phase alternating current excitation power supply having a phase difference of 120° respectively.

Preferably, axes of the three coils of the coils group are perpendicular to the pump slot.

Preferably, the iron cores on both sides of the pump slot in one electromagnetic pump are integrated, and three annular grooves are formed on the iron core to receive the three coils respectively.

Preferably, the three annular grooves are formed in the iron core on one side of the pump slot.

Preferably, the three annular grooves are formed in the iron cores on both sides of the pump slot.

Preferably, the two iron cores of the one electromagnetic pump are tightly contacted to each other and electrically and magnetically communicate with each other, and at least two of the three annular grooves are commonly provided in one of the iron cores.

Preferably, the pump slot is consisted of a straight line or a multiple-section broken line or a curve.

Preferably, the nozzle is provided at an exit of the pump slot.

Preferably, the electromagnetic pump is placed on one side of the tin bath or below the tin bath.

Preferably, the number of the electromagnetic pumps is two.

In contrast with the conventional technology, the advantages of the present invention are in that the electromagnetic driving wave soldering pot according to the present invention uses a three-phase asynchronism induced electromagnetic pump to generate a straight thrust, such that the rotation of the blade of the mechanical pump is avoided, which thus ensures a stable wave, small vibration of the liquid surface in the tin bath, and less oxide generation. Because of the absence of the rotation component, there is no abrasion, which realizes free of maintenance, and eliminates the periodical maintenance. Therefore the cost is reduced and can facilitate the user. On the other hand, the electromagnetic driving wave soldering pot according to the present invention uses common three-phase alternating voltage, that is, the phase difference of the current is 120°. Therefore, there is no need for specific device to convert the voltage, i.e. the voltage can be used directly. Furthermore, the axes of the three coils of the electromagnetic pump spaced apart for 1/3 of the coil-side space of the one coil, and the current phase difference therebetween is 120° , therefore the composite vector of the positive (i.e. the direction along the flow of the liquid metal) magnetic field force the liquid metal to move toward the nozzle along the pump slot, while the composite vector of the negative (i.e. the opposite direction relative to the flow direction of the liquid metal) magnetic field is zero, this thus completely eliminates the power loss caused by the negative magnetic field, and the power of the alternating magnetic field can be effectively used. Because the energy consumption is decreased to 50% while the thrust and flow rate are increased by over 2 times, this electromagnetic driving wave soldering pot can totally replace the conventional mechanical pump and meet the requirement of the practical production.

### Brief Description to Drawings

The present invention is described hereinafter in connection with the appended drawings, wherein:

Fig. 1 is a sectional illustrative view of the first preferred embodiment of the electromagnetic driving wave soldering pot according to the present invention;

Fig. 2 is a sectional view taken along the line A-A in Fig. 1;

Fig. 3 is a sectional illustrative view of the second preferred embodiment of the electromagnetic driving wave soldering pot according to the present invention; and

Fig. 4 is a sectional illustrative view of the third preferred embodiment of the electromagnetic driving wave soldering pot according to the present invention.

### Detailed Description of the Invention

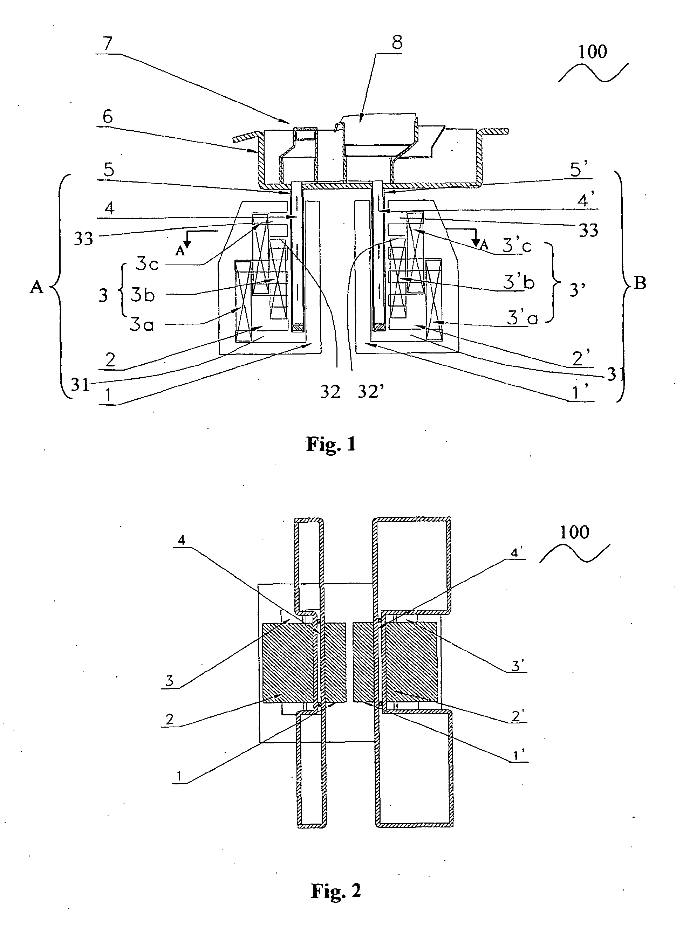

As shown in Figs. 1 and 2, the electromagnetic driving wave soldering pot 100 according to the present invention includes a first electromagnetic pump A, a second electromagnetic pump B, a tin bath 6 and nozzles 7, 8. The first electromagnetic pump A includes iron cores 1, 2, an excitation coils group 3, and a pump slot 5. The second electromagnetic pump B includes iron cores 1', 2', an excitation coil group 3' and a pump slot 5'. Since the iron cores 1, 2 and the excitation coil group 3 of the first electromagnetic pump A are substantially identical with that of the second electromagnetic pump B, the detailed description hereinafter is directed solely to the first electromagnetic pump A.

The iron cores 1, 2 may be designed as an integral, or may be separately provided. If the iron cores 1, 2 are separately provided, then the iron cores 1, 2 must reliably contact to each other to ensure the electrical and magnetical communication between the iron cores 1, 2. A plurality of annular grooves 31, 32 and 33 is provided on the iron core 1, the depth of the annular groove 31 in the lateral direction is larger than that of the annular groove 33, while the depth of the annular groove 33 in the lateral direction is larger than that of the annular groove 32. The coil group 3 includes three coils 3a, 3b and 3c arranged in the iron core 2, and the coils 3a, 3b and 3c are positioned in the annular grooves 31, 32 and 33 respectively. Moreover, the distance between the central lines of the coils 3a, 3b and 3c is 1/3 of the coil-side space (the distance between the central lines of the two coil sides) of one single coil, and the current phases of the above three coils 3a, 3b and 3c lag behind subsequently by 120° . That is to say, the current phase of the coil 3b lags behind that of the coil 3a by 120° , while the current phase of the coil 3c lags behind that of the coil 3b by 120°.

As shown in Figs. 1 and 2, the pump slot 5 is provided between the iron cores 1 and 2. The pump slot 5 may be formed as a single straight line, or may be formed as a multiple-sections broken line or curve. The coils 3a, 3b and 3c are arbitrarily arranged in a direction perpendicularly to the pump slot 5. The first and second electromagnetic pumps A and B are provided below the tin bath 6 respectively. The iron cores 1 and 2 are connected to each other below the pump slot 5. The pump slot 5 is connected with the tin bath 6, and is inserted into the first wave nozzle 7 to communicate with the first wave nozzle 7. Liquid metal 4 enters the first wave nozzle 7 through the pump slot 5. Similarly, the pump slot 5' is connected to the tin bath 6 and is inserted into the second wave nozzle 8 to communicate with the second wave nozzle 8. Liquid metal 4' enters the second wave nozzle 8 through the pump slot 5'.

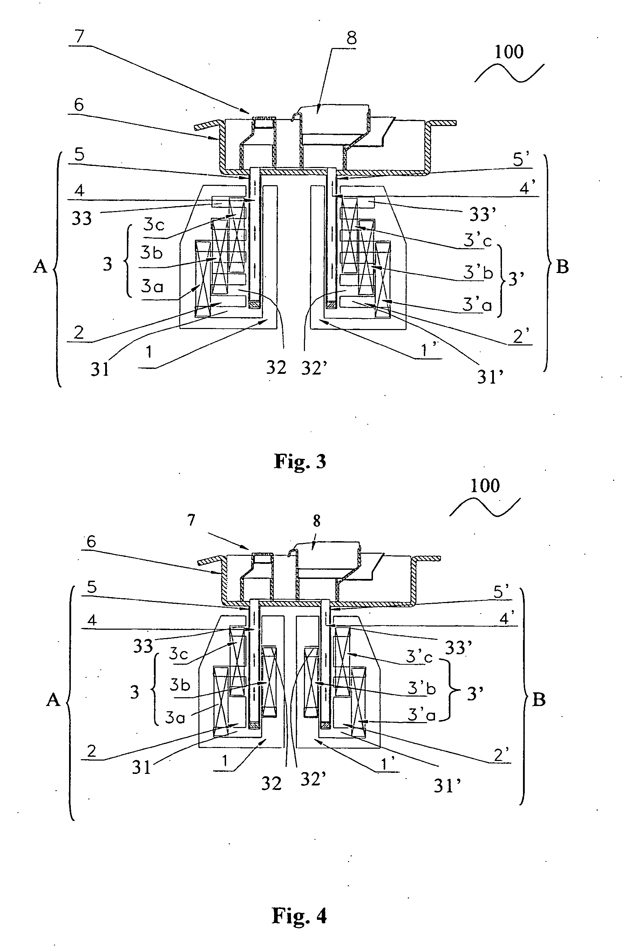

Figs. 3 and 4 show sectional views of other two preferred embodiments of the electromagnetic driving wave soldering pot 100 according to the present invention, wherein the same number denotes the same component. The embodiment shown in Fig. 3 is different from that of Fig. 1 in that, the coil 3c of Fig. 1 is placed between the coils 3a and 3b, the central line of the coil 3a is spaced from the central line of the coil 3b by 1/3 of the coil-side space of the coil, and the central line of the coil 3b is spaced from the central line of the coil 3c by 1/3 of the coil-side space of the coil. While in the embodiment of the Fig. 3, the coil 3b is placed between the coil 3a and the coil 3c, and the central lines of the coil 3a, 3b and 3c are sequentially spaced apart by 1/3 of the coil-side space of the coil.

The embodiment shown in Fig. 4 is different from that of Fig. 1 in that, in the embodiment of the Fig. 4, a groove 32 is formed in the portion of the iron core 1 near to the pump slot 5, the coil 3b is provided in the groove 32 of the iron core 1, and thus the coils 3a and 3c are provided in the iron core 2 next to each other, while the coil 3b is provided in the iron core 1.

As shown in Figs. 1, 3 and 4, upon operating, the coils group 3 and 3' are supplied with standard three-phase alternating voltage, phase difference of which is 120° . The current in the coils 3a, 3b and 3c and the coils 3'a, 3'b and 3'c lag behind subsequently by phase of 120° respectively in the direction from pump slots 5 and 5' to nozzles 7 and 8, and along a positively direction of the liquid metal flow of the pump slots 5, 5'. Additionally, the phase difference of the negative magnetic field is 120° , and the coils 3a, 3b and 3c and the coils 3'a, 3'b and 3'c are spaced apart by 1/3 of the coil-side space of the coil along the direction of the pump slots 5, 5' respectively. Therefore, after being supplied with the current, magnetic fields in the pump slots 5, 5' which are respectively generated by the coils 3a, 3b and 3c and the coils 3'a, 3'b and 3'c superpose to each other, and the composite vector of the negative magnetic field is zero. Therefore, the composite magnetic field thereof is completely an unidirectional traveling wave magnetic field directed from the pump slots 5, 5' to the nozzles 7, 8, and the magnitude thereof is about 1.5 times to the magnitude of the magnetic field of one single coil, the magnetic lines of the composite magnetic field cross the pump slots 5, 5' and then go through the iron cores 1, 1' and iron cores 2, 2' to form a loop. Under the action of the unidirectional traveling wave magnetic field, the conductive liquid metal flows in the direction from the pump slots 5, 5' to the nozzles 7, 8, and the liquid metal enters from both sides of the pump slots 5, 5', and is driven to flow toward the flow nozzles 7, 8 in the pump slots 5, 5' and then fall down from the nozzles 7, 8. Then, the liquid metal is pumped into the pump slots 5, 5' again, and the whole process cycles in this way.

Preferably, a electromagnetic shielding board (not shown) may be provided between the first and second electromagnetic pumps A and B to prevent the electromagnetic coupling and interfering between the first and second electromagnetic pumps A and B, and improve the efficiency of the electromagnetic pump. Additionally, the first and second electromagnetic pumps A and B may be provided not only below the tin bath 6, but also beside the tin bath 6, and the orientation of the first and second electromagnetic pumps A and B may be either parallel or perpendicular to the direction of the longitudinal axis of the nozzles 7 and 8.

In fact, the electromagnetic driving wave soldering pot 100 according to the present invention may employ only one electromagnetic pump and the corresponding pump slot and nozzle.

While the invention has been particularly shown and described with respect to a specific embodiment thereof, it should be noted that it will be understood by those skilled in the art that changes and modifications to the present invention may be made without departing from the scope of the invention as expressed in the appended claims.

## Claims

1. An electromagnetic driving wave soldering pot, which includes at least a electromagnetic pump (A, B), at least a bath (6) suitable for containing tin and at least a nozzle (7, 8), the each electromagnetic pump (A, B) includes two iron cores (1, 2, 1', 2'), a coils group (3, 3') provided between the two iron cores (1, 2, 1'; 2') and a pump slot (5, 5'), the pump slot (5, 5') communicates with the nozzle (7, 8), **characterised in that** coils group (3, 3') includes three coils (3a, 3b, 3c, 3'a, 3'b, 3'c), and the three coils (3a, 3b, 3c, 3'a, 3'b, 3'c) offset from each other by 1/3 of the coil-side space of one single coil (3a, 3b, 3c, 3'a, 3'b, 3'c) along the direction of the pump slot (5, 5'), and the three coils (3a, 3b, 3c, 3'a, 3'b, 3'c) are in use supplied with three-phase alternating current excitation power supply having a phase difference of 120° .

2. The electromagnetic driving wave soldering pot according to claim 1, wherein axes of the three coils (3a, 3b, 3c, 3'a, 3'b, 3'c) of the coil group (3, 3') are perpendicular to the pump slot (5, 5').

3. The electromagnetic driving wave soldering pot according to claim 1, wherein the iron cores (1, 2, 1', 2') on both sides of the pump slot (5, 5') in one electromagnetic pump (A, B) are integral, and three annular grooves (31, 32, 33, 31', 32', 33') are formed on the iron cores (1, 2, 1', 2') for receiving the three coils (3a, 3b, 3c, 3'a, 3'b, 3'c) respectively.

4. The electromagnetic driving wave soldering pot according to claim 3, wherein the three annular grooves (31, 32, 33, 31', 32', 33') are formed in the iron core (1, 2, 1', 2') on one side of the pump slot (5, 5').

5. The electromagnetic driving wave soldering pot according to claim 3, wherein the three annular grooves (31, 32, 33, 31', 32', 33') are formed in the iron cores (1, 2, 1', 2') on both sides of the pump slot (5, 5').

6. The electromagnetic driving wave soldering pot according to claim 1, wherein the two iron cores (1,2, 1', 2') of the one electromagnetic pump (A, B) tightly contact to each other and electrically and magnetically communicate with each other, and at least two of the three annular grooves (31, 32, 33, 31', 32', 33') are commonly formed in one iron core (1, 2, 1', 2').

7. The electromagnetic driving wave soldering pot according to any one of the claims 1-6, wherein the pump slot (5, 5') is consisted of a straight line or a multiple-sections broken line or a curve.

8. The electromagnetic driving wave soldering pot according to claim 7, wherein the nozzle (7, 8) is provided at an exit of the pump slot (5, 5').

9. The electromagnetic driving wave soldering pot according to claim 7, wherein the electromagnetic pump (A, B) is placed on one side of the tin bath (6) or below the tin bath (6).

## Patentansprüche

1. Schwalllötbad-Tiegel mit elektromagnetischem Antrieb, der wenigstens eine elektromagnetische Pumpe (A, B), wenigstens ein Bad (6), das Zinn enthalten kann, und wenigstens eine Düse (7, 8) umfasst, wobei jede elektromagnetische Pumpe (A, B) zwei Eisenkerne (1, 2, 1', 2'), eine Spulengruppe (3, 3'), die zwischen den zwei Eisenkernen (1, 2, 1', 2') vorgesehen ist, und einen Pumpenschlitz (5, 5') enthält, wobei der Pumpenschlitz (5, 5') mit der Düse (7, 8) kommuniziert, **dadurch gekennzeichnet, dass** die Spulengruppe (3, 3') drei Spulen (3a, 3b, 3c, 3'a, 3'b, 3'c) enthält, die drei Spulen (3a, 3b, 3c, 3'a, 3'b, 3'c) voneinander um 1/3 des spulenseitigen Raums einer einzigen Spule (3a, 3b, 3c, 3'a, 3'b, 3'c) in Richtung des Pumpenschlitzes (5, 5') zueinander versetzt sind und die drei Spulen (3a, 3b, 3c, 3'a, 3'b, 3'c) im Gebrauch mit einer Dreiphasen-Wechselstromerregungs-Leistungsversorgung, die eine Phasendifferenz von 125° hat, versorgt werden.

2. Schwalllötbad-Tiegel mit elektromagnetischem Antrieb nach Anspruch 1, wobei die Achsen der drei Spulen (3a, 3b, 3c, 3'a, 3'b, 3'c) der Spulengruppe (3, 3') zu dem Pumpenschlitz (5, 5') senkrecht sind.

3. Schwalllötbad-Tiegel mit elektromagnetischem Antrieb nach Anspruch 1, wobei die Eisenkerne (1, 2, 1', 2') auf beiden Seiten des Pumpenschlitzes (5, 5') in einer elektromagnetischen Pumpe (A, B) einteilig ausgebildet sind und drei ringförmige Nuten (31, 32, 33, 31', 32', 33') an den Eisenkernen (1, 2, 1', 2') ausgebildet sind, um die drei jeweiligen Spulen (3a, 3b, 3c, 3'a, 3'b, 3'c) aufzunehmen.

4. Schwalllötbad-Tiegel mit elektromagnetischem Antrieb nach Anspruch 3, wobei die drei ringförmigen Nuten (31, 32, 33, 31', 32', 33') in dem Eisenkern .(1, 2, 1', 2') auf einer Seite des Pumpenschlitzes (5, 5') ausgebildet sind.

5. Schwalllötbad-Tiegel mit elektromagnetischem Antrieb nach Anspruch 3, wobei die drei ringförmigen Nuten (31, 32, 33, 31', 32', 33') in den Eisenkernen (1, 2, 1', 2') auf beiden Seiten des Pumpenschlitzes (5, 5') ausgebildet sind.

6. Schwalllötbad-Tiegel mit elektromagnetischem Antrieb nach Anspruch 1, wobei die zwei Eisenkerne (1, 2, 1', 2') der einen elektromagnetischen Pumpe (A, B) miteinander in engem Kontakt sind und miteinander elektrisch und magnetisch kommunizieren und wenigstens zwei der drei ringförmigen Nuten (31, 32, 33, 31', 32', 33') gemeinsam in einem Eisenkern (1, 2, 1', 2') ausgebildet sind.

7. Schwalllötbad-Tiegel mit elektromagnetischem Antrieb nach einem der Ansprüche 1-6, wobei der Pumpenschlitz (5, 5') aus einer geraden Linie oder aus einer unterbrochenen Linie mit mehreren Abschnitten oder aus einer Kurve besteht.

8. Schwalllötbad-Tiegel mit elektromagnetischem Antrieb nach Anspruch 7, wobei die Düse (7, 8) an einem Auslass des Pumpenschlitzes (5, 5') vorgesehen ist.

9. Schwalllötbad-Tiegel mit elektromagnetischem Antrieb nach Anspruch 7, wobei die elektromagnetische Pumpe (A, B) auf einer Seite des Zinnbades (6) oder unterhalb des Zinnbades (6) angeordnet ist.

## Revendications

1. Creuset de soudure à la vague à entraînement électromagnétique, qui comprend au moins une pompe électromagnétique (A, B), au moins un bain (6) convenant pour contenir de l'étain et au moins une buse (7, 8), chaque pompe électromagnétique (A, B) comprend deux noyaux de fer (1, 2, 1', 2'), un groupe de bobinages (3, 3') prévu entre les deux noyaux de fer (1, 2, 1', 2') et une fente de pompe (5, 5'), la fente de pompe (5, 5') communique avec la buse (7, 8), **caractérisé en ce que** le groupe de bobinages (3, 3') comprend trois bobinages (3a, 3b, 3c, 3'a, 3'b, 3'c) et les trois bobinages (3a, 3b, 3c, 3'a, 3'b, 3'c) sont décalés les uns par rapport aux autres de 1/3 de l'espace du côté bobinage d'un premier bobinage unique (3a, 3b, 3c, 3'a, 3'b, 3'c) selon la direction de la fente de pompe (5, 5'), et les trois bobinages (3a, 3b, 3c, 3'a, 3'b, 3'c) reçoivent en utilisation une alimentation d'excitation en courant alternatif triphasé ayant une différence de phase de 120°.

2. Creuset de soudure à la vague à entraînement électromagnétique selon la revendication 1, dans lequel les axes des trois bobinages (3a, 3b, 3c, 3'a, 3'b, 3'c) du groupe de bobinages (3, 3') sont perpendiculaires à la fente de pompe (5, 5').

3. Creuset de soudure à la vague à entraînement électromagnétique selon la revendication 1, dans lequel les noyaux de fer (1, 2, 1', 2') des deux côtés de la fente de pompe (5, 5') dans une pompe électromagnétique (A, B) sont solidaires et trois rainures annulaires (31, 32, 33, 31', 32', 33') sont formées sur les noyaux de fer (1, 2, 1', 2') pour recevoir les trois bobinages (3a, 3b, 3c, 3'a, 3'b, 3'c) respectivement.

4. Creuset de soudure à la vague à entraînement électromagnétique selon la revendication 3, dans lequel les trois rainures annulaires (31, 32, 33, 31', 32', 33') sont formées dans le noyau de fer (1, 2, 1', 2') sur un seul côté de la fente de pompe (5, 5').

5. Creuset de soudure à la vague à entraînement électromagnétique selon la revendication 3, dans lequel les trois rainures annulaires (31, 32, 33, 31', 32', 33') sont formées dans les noyaux de fer (1, 2, 1', 2') des deux côtés de la fente de pompe (5, 5').

6. Creuset de soudure à la vague à entraînement électromagnétique selon la revendication 1, dans lequel les deux noyaux de fer (1, 2, 1', 2') de la une pompe électromagnétique (A, B) sont étroitement en contact l'un avec l'autre et communiquent électriquement et magnétiquement l'un avec l'autre, et au moins deux des trois rainures annulaires (31, 32, 33, 31', 32', 33') sont formées en commun dans un seul noyau de fer (1, 2, 1', 2').

7. Creuset de soudure à la vague à entraînement électromagnétique selon l'une quelconque des revendications 1 à 6, dans lequel la fente de pompe (5, 5') consiste en une ligne droite ou bien en une ligne brisée à sections multiples ou en une courbe.

8. Creuset de soudure à la vague à entraînement électromagnétique selon la revendication 7, dans lequel la buse (7, 8) est prévue au niveau d'une sortie de la fente de pompe (5, 5').

9. Creuset de soudure à la vague à entraînement électromagnétique selon la revendication 7, dans lequel la pompe électromagnétique (A, B) est placée sur un premier côté du bain d'étain (6) ou au-dessous du bain d'étain (6).
